# EUROPÄISCHE PATENTANMELDUNG

(11) **EP 4 197 857 A1**
(43) Veröffentlichungstag der Anmeldung: **21.06.2023**
(21) Anmeldenummer: 21020645.4
(22) Anmeldetag: 18.12.2021
(51) Int. Cl.: B60P 3/36, B60P 7/08

(54) **SCHNITTSTELLE ZUR ANORDNUNG VON MODULEN IN EINEM FAHRZEUG UND VERFAHREN ZUM EIN- UND AUSBAU DER MODULEN**

(71) Anmelder: Autopark Schwaben, 73092 Heiningen (DE)
(72) Erfinder: Somer, Cuma, 73054 Eislingen (DE)
(74) Vertreter: Fehrenbacher, Eckhard Anton

(57) **Zusammenfassung**

Eine erfindungsgemäße Schnittstelle ermöglicht den schnellen, werkzeuglosen Ein- und Ausbau eines Cube6. Dabei umfasst die Schnittstelle einen Grundrahmen (16) mit Aufnahmeschienen (15), in deren Öffnungen (21, 22) Gleitelemente (12), die mit dem Cube6 fest verbunden sind, aufgenommen werden. Ein in den Aufnahmeschienen (15) platzierter Cube6 ist längsbeweglich gelagert, wird in ihre Endposition gebracht und mit einem Haltemittel arretiert.

## Beschreibung

Die Erfindung betrifft eine Schnittstelle zur Anordnung von Modulen in einem Kraftfahrzeug gemäß dem Oberbegriff des Schutzanspruchs 1, sowie ein Verfahren zum werkzeuglosen Ein- und Ausbau der Module gemäß dem Oberbegriff der Schutzansprüche 12 und 13.

Fahrzeuge mit einem Innenausbau zur Ausbildung von Wohn- und/oder Schlafmöglichkeiten sind im Stand der Technik bekannt. So offenbart beispielsweise die EP 2 676 838 ein Kraftfahrzeug mit mindestens zwei Modulen, die unter ihrer Auflagefläche Funktionskomponenten aufweisen, wobei die Auflageflächen eine identische Höhe haben, die eine gemeinsame Sitz- und/oder Schlaffläche bilden können. Die Anordnung der Module erfolgt in der Form, dass ein Durchgang von der Heckklappe des Kraftfahrzeugs bis zur Seitentür gewährleistet ist.

Entscheidet sich ein Käufer für ein Kraftfahrzeug mit einer Wohn- und/oder Schlafmöglichkeit kann er aus einer Vielzahl von Modulen bezüglich deren Funktion und Größe wählen. Es sind Module bekannt deren Funktionseinheit beispielsweise eine Spüle, oder einen Gasherd, oder eine Sanitäreinheit, oder ein Kühlelement oder andere im Wohn- und Schlafbereich gewünschte Funktion umfasst. Die gewünschten Module werden dann mit den im Stand der Technik bekannten Befestigungsmitteln am Chassis des Fahrzeugs, beziehungsweise an den darin vorgesehenen Haltemitteln befestigt, beziehungsweise verschraubt. Dadurch wird die Sicherheit, während des Betriebs des Kraftfahrzeugs im Straßenverkehr, gewährleistet.

Es ist auch bekannt beispielsweise ein Küchenmodul, bestehend aus einer Spüle und einem Gasherd, für die Benutzung im Freien, aus dem Innenraum eines Kraftfahrzeugs auszubauen. Für den Ausbau eines Moduls ist es erforderlich, Verbindungen mit Werkzeugen, beispielsweise Gabelschlüssel oder ähnlichem, zu lösen. Sehr oft sind die Verbindungen schwer zugänglich, was die Demontage und anschließende Montage einzelner Module erschwert und den Zeitaufwand für den Aus- und Einbau enorm erhöht.

Es ist Aufgabe der Erfindung, den Ein- und Ausbau von Modulen in einem Kraftfahrzeug einfacher zu gestalten und zu verbessern.

Eine erfindungsgemäße Lösung umfasst eine Schnittstelle zwischen der Ladefläche eines Kraftfahrzeugs und einem Modul. Sie bietet die Möglichkeit, je nach Bedarf, den Innenraum eines Kraftfahrzeugs mit verschiedenen Modulen auszustatten. Die Schnittstelle besteht aus einem profilierten Grundrahmen mit Öffnungen, der ortsfest mit dem Kraftfahrzeug verbunden ist, und mit Gleitelementen die an den Modulen befestigt sind.

Der vielseitige Anwender eines Kraftfahrzeugs mit Wohn- beziehungsweise Schlafmöglichkeit hat die Möglichkeit, eine Vielzahl von Modulen mit den verschiedensten Funktionseinheiten anzuschaffen. Beispielsweise kann er mehr Module besitzen, als im Bereich der Ladefläche seines Kraftfahrzeugs montiert werden können. Je nach Bedarf, abhängig von seiner geplanten Ausfahrt oder Reise, wählt er die benötigten Module aus und verbindet diese, ohne erforderliche Werkzeuge, mit dem Kraftfahrzeug. Die erfindungsgemäße Schnittstelle erleichtert das Ein- bzw. Ausbauen enorm, da dieses werkzeuglos erfolgen kann.

Erfindungsgemäß wird eine Schnittstelle vorgeschlagen, die die Anordnung von Modulen sogenannten Cube6 Boxen enorm erleichtert. Im Folgenden steht Cube6 für ein Modul unabhängig seines Inhalts.

Ein Cube6 weist eine Funktionseinheit auf, beispielsweise einen Kocher mit Gaskartuschen, oder eine Edelstahlspüle mit Frisch- und Abwassertank, oder eine Kühleinheit, oder eine Anordnung für Besteck und Töpfe, oder eine Sanitäreinheit, oder einen Aufnahmeraum, etc. Unabhängig von der Funktionseinheit sind die Außenmaße eines Cube6 immer identisch. Dadurch ist es möglich, an einer dafür vorgesehenen Stelle jeden Cube6 zu platzieren, unabhängig seines Inhalts. Dies ermöglicht die größtmögliche Flexibilität für den Nutzer. Jeder Cube6 kann an der Stelle angeordnet werden, an der der Anwender es für angemessen hält. Aufgrund der Flexibilität und des einfachen Ein- bzw. Ausbaus kann beispielsweise ein Kleinbus oder Transporter mit wenigen Handgriffen zu einem vollwertigen Camp Mobil umgebaut werden.

Am Boden eines Cube6 mit den Außenmaßen, Länge 57 cm, Breite 48 cm, Höhe 52,5 cm sind vier Gleitelemente angeordnet. Diese sind Teil der erfindungsgemäßen Schnittstelle. Diese Gleitelemente dienen beim Einbau als Führungselemente und weisen entsprechende Profile auf. Nach erfolgreichem Einbau stehen die Profile der Führungselemente in Wirkverbindung mit einer Aufnahmeschiene und bilden mit dieser eine formschlüssige Verbindung. Durch die formschlüssige Verbindung zwischen Cube6 und der Aufnahmeschiene in Verbindung mit einem Haltemittel ist die sichere Anordnung auch während des Fahrbetriebs des Kraftfahrzeugs gewährleistet.

Mehrere Aufnahmeschienen und wenigstens ein Verbindungselement bilden einen Grundrahmen, der Teil der erfindungsgemäßen Schnittstelle ist. In seiner einfachsten Ausfertigung umfasst ein Grundrahmen zwei Aufnahmeschienen und ein Verbindungselement. Auf solch einem Grundrahmen kann ein Cube6 angeordnet werden. Vorzugsweise umfasst ein Grundrahmen vier Aufnahmeschienen und ein Verbindungselement. Eine solche Ausführungsform eines Grundrahmens bildet die Basis für zwei nebeneinander angeordnete Cube6. In dieser Ausführungsform sind die beiden mittleren Aufnahmeschienen beabstandet zueinander angeordnet. Dabei ist der Abstand so gewählt, dass die Haltemittel des Cube6 leicht zugänglich sind. Die Außenmaße des Grundrahmens entsprechen vorzugsweise den Außenmaßen der montierten Cube6. Entspricht der Abstand zwischen dem im Boden eines Kraftfahrzeugs vorhandenen Befestigungsschienen nicht dem Abstand des Grundrahmens, kann dieser Anpassungsmittel in Form von flächenhaft ausgebildeten Verbindungsmitteln aufweisen, um die Abstandsunterschiede auszugleichen.

Der Grundrahmen kann an den im Fahrzeug vorgesehenen Befestigungsschienen ortsfest positioniert und befestigt werden. Dazu können beispielsweise handelsübliche Befestigungsmittel in Form von Schrauben und Muttern Verwendung finden. Nach der Verbindung des Grundrahmens kann dieser als Teil des Kraftfahrzeugs betrachtet werden und bildet einen Teil der erfindungsgemäßen Schnittstelle zwischen Kraftfahrzeug und Cube6. Erfindungsgemäß können Cube6 werkzeuglos vom Grundrahmen abgenommen und angebracht werden. Beispielsweise kann der Grundrahmen im Heckbereich eines Fahrzeugs und/oder im Bereich der Ladefläche, die an den Fahrersitz bzw. Beifahrersitz anschließt, befestigt werden. Werden mehrere Module angeordnet kann deren Oberseite als Sitzbeziehungsweise Liegefläche dienen. Das Cube6 weist eine Höhe auf, die der Höhe einer Liegeflächenverlängerung, eines so genannten Multiflexboards entspricht. Dadurch erübrigt sich eine solche Anschaffung.

Eine Aufnahmeschiene kann aus einem Aluminiumprofil gebildet sein und kann einen quadratischen Querschnitt aufweisen. Je nach Anforderungsprofil und damit verbundenen Stabilitätsanforderungen können die Aufnahmeschienen verschieden strukturierte Querschnitte beziehungsweise Profile aufweisen. Im oberen Bereich der Aufnahmeschiene, der mit einem Cube 6 in Verbindung steht, weist die Aufnahmeschiene Öffnungen und wenigstens einen Gleitabschnitt auf. Beim Einbau eines Cube6 wird dieser mit seinen am Boden angeordneten Führungselementen oder Gleitelementen so platziert, dass die Führungselemente in die Öffnungen der Aufnahmeschiene ragen. Anschließend wird der Cube6 in seine Endposition verschoben. Dabei gleiten die Führungselemente entlang dem Gleitabschnitt. Nach dem Erreichen des Cube6 in seiner Endposition wird er durch ein Verschlusselement ortsfest gehalten.

In einer besonderen Ausführungsform ist der Grundrahmen mittels eines Auszugs am Kraftfahrzeug befestigt. Dies ist von besonderem Vorteil, wenn beispielsweise der Cube6 eine Funktionseinheit in Form eines Kochelements umfasst. Dann ist es möglich, beispielsweise bei geöffneter Heckklappe den Cube6 samt Grundrahmen aus dem Innenbereich des Kraftfahrzeugs herauszuziehen. Dies ermöglicht die Benutzung, beispielsweise das Kochen, des Cube6 außerhalb des Innenraums eines Kraftfahrzeugs.

Erfindungsgemäß wird ein Grundrahmen mit einem Gleitabschnitt und Öffnungen vorgeschlagen, wobei die Öffnungen Gleitelemente, die an dem Cube6 angeordnet sind, aufnehmen. Dabei können die Öffnungen an der dem Boden des Kraftfahrzeugs abgewandten Seite des Grundrahmens oder alternativ an den Seitenflächen des Grundrahmens angeordnet sein. Sind die Öffnungen an den Seitenflächen der Aufnahmeschiene angeordnet ist es erforderlich, dass die Gleitelemente an den Seitenflächen des Cube6 befestigt sind.

Ein Cube6 ist ein zweiteiliges, würfelförmiges Modul, welches durch einen Rahmen in Leichtbauweise, mit Seitenwänden aus Hohlraumkammerplatten gebildet ist. Der Rahmen kann beispielsweise aus Leichtmetallstreben (Aluminiumstreben) und falls erforderlich aus Winkelstücken hergestellt werden. In seinen Seitenflächen weist der Cube6 gefederte Haltegriffe auf, die in die Seitenwände integriert sind und somit nicht über die Außenmaße des Cube6 vorstehen. Der Aufnahmeraum, der eine Funktionseinheit aufnimmt, wird durch einen abnehmbaren beweglichen Deckel mittels eines Butterflyverschlusses verschlossen. Der Deckel des Cube6 kann als Tischplatte Verwendung finden. Als Verbindungselemente zur Herstellung des Aufnahmeraums und des Deckels des Cube6 werden ausschließlich Nieten verwendet.

Erfindungsgemäß wird ein Verfahren zum werkzeuglosen Einbau eines Cube (6) in ein Kraftfahrzeug mit den Schritten
- Einfügen der Führungselemente eines Cube6 in die Öffnungen, einer Aufnahmeschiene eines in einem Kraftfahrzeug montierten Grundrahmens,
- Verschieben des Cube6 in Längsrichtung, bis es seine Endposition erreicht hat und
- Arretieren des Cube6 mittels einem Haltemittel.

Beim werkzeuglosen Ausbau eines Cube6 werden obige Verfahrensschritte in umgekehrter Reihenfolge durchgeführt. Der Ausbau eines Cube6 umfasst folgende Schritte,
- Lösen des Haltemittels,
- Verschieben des Cube6 in Richtung des ersten Endes einer Aufnahmeschiene, bis die Führungselemente des Cube6 den Bereich der Öffnungen erreichen,
- Anheben und Entnehmen des Cube6.

Die Lehre der Erfindung kann in verschiedenen Möglichkeiten vorteilhaft ausgestaltet und weitergebildet werden. Dazu wird einerseits auf die nachgeordneten Ansprüche und andererseits auf die nachfolgende Erläuterung bevorzugter Ausführungsbespiele eines Cube6 sowie einer erfindungsgemäßen Anordnung verwiesen. In der Zeichnung zeigen,
- Fig. 1: ein Cube6 in skizzenhafter Darstellung,
- Fig. 2: die Heckansicht eines Kraftfahrzeugs mit offener Heckklappe, und die Anordnung von zwei Cube6 gemäß Figur 1,
- Fig. 3: die Seitenansicht eines Kraftfahrzeugs mit offener Schiebetür, und die Anordnung von zwei Cube6 gemäß Figur 1,
- Fig. 4: die Draufsicht auf eine Ladefläche eines Kraftfahrzeugs mit der Anordnung von zwei voneinander unabhängigen Grundrahmen in vereinfachter, auszugsweiser Darstellung,
- Fig. 5: die erfindungsgemäße Schnittstelle mit einer Aufnahmeschiene im Querschnitt und mit einem Gleitelement in vereinfachter, auszugsweiser Darstellung,
- Fig. 6: eine Aufnahmeschiene in Draufsicht mit Öffnungen zur Aufnahme von Gleitelementen, sowie die Draufsicht und einen Querschnitt von Gleitelementen in vereinfachter, auszugsweiser Darstellung,
- Fig. 7: ein Grundrahmen zur Aufnahme von zwei Cube6 in Draufsicht mit flächenhaft ausgebildetem Verbindungsmittel, in vereinfachter, auszugsweiser Darstellung und
- Fig. 8: eine Seitenansicht eines Cube6 in einer ersten Position, der Einfüge- bzw. der Entnahmeposition, und in einer zweiten Position, der Endposition, in vereinfachter, auszugsweiser Darstellung.

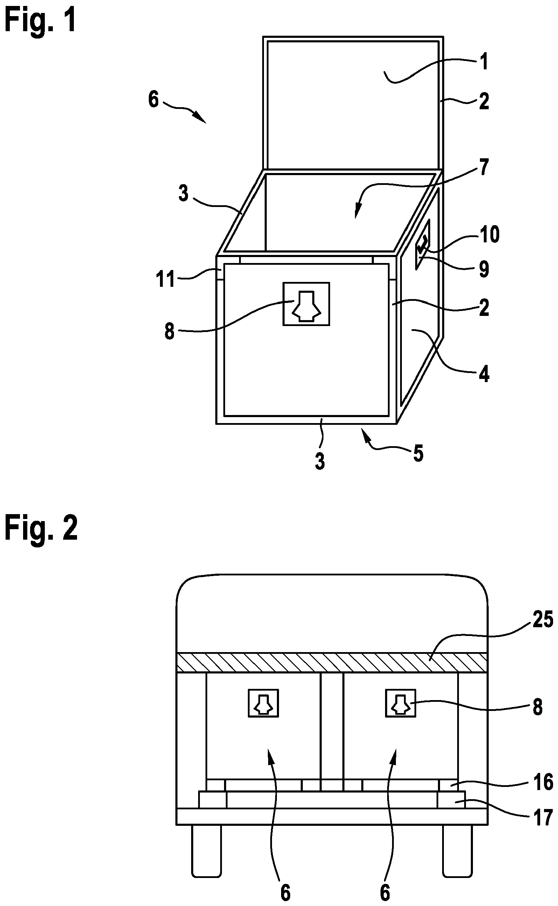

Figur 1 zeigt einen Cube6, hergestellt mittels einer Leichtbauweise. Um das Grundgewicht der Cube6 möglichst gering zu halten, wird der Rahmen 2 für den Aufnahmeraum 7 und den Deckel 1 durch Leichtbauprofile 3, vorzugsweise aus Aluminium gebildet. Die Seitenwände 4, der Boden 5 und der Deckel 1 bestehen aus Hohlkammerplatten, beispielsweise aus Polycarbonat, ein sehr zäher und äußerst schlagfester Kunststoff. Die Leichtbauprofile 3 und die Seitenwände 4 sowie der Boden 5 werden miteinander vernietet, dazu können auch, falls aus stabilitätsgründen erforderlich, Winkelstücke 11 verwendet werden. Es entsteht ein Cube6 (Box) mit einem Aufnahmeraum 7. Ein Cube6 weist keine Verschraubungen auf.

An der Vorderseite ist ein Verschluss 8 in Form eines bekannten Butterflyverschlusses angeordnet. Mit dem Verschluss 8 kann der Deckel 1, der mittels lösbaren Gelenken (nicht dargestellt) am Rahmen 2 des Aufnahmeraums 7 drehbar angeordnet ist, sicher verschlossen werden. Dadurch wird sichergestellt, dass eine Funktionseinheit (nicht dargestellt) im Aufnahmeraum 7 sicher verstaut ist. In die Seitenwand 4 ist eine Mulde 9 integriert, die einen beweglich gelagerten Handgriff 10 aufnimmt. Der Handgriff 10 wird mittels einer Federung in eine Transportstellung innerhalb der Mulde gehalten. Gemäß dem Ausführungsbeispiel nach Figur 1 weist der Cube6 die Abmessungen, Länge 57 cm, Breite 48 cm, Höhe 52,5 cm auf.

Die Abmessungen eines Cube6 können an den in einem Kraftfahrzeug vorhandenen Raum angepasst werden. So ist es beispielsweise von Vorteil, wenn zwei nebeneinander angeordnete Cube6 im Heckbereich eines Kraftfahrzeugs, im Wesentlichen, die zur Verfügung stehende Breite beanspruchen. Darüber hinaus ist nur Platzbedarf für das Handling erforderlich. Die Anordnung eines Cube6 erfolgt in der Art und Weise, dass genügend Raum vorhanden ist, um mit den Händen die federgelagerten Handgriffe 10 zu fassen und den Cube6 zu montieren beziehungsweise demontieren.

Aus Figur 2 ist die Rückansicht eines Kraftfahrzeugs mit geöffneter Heckklappe (nicht dargestellt) ersichtlich. Dabei zeigt Figur 2 zwei nebeneinander angeordnete Cube6 die auf einem Grundrahmen 16 montiert sind. Der Grundrahmen 16 ist über einen Auszug 17 mit dem Fahrzeugboden verbunden. Deshalb ist es möglich diesen Grundrahmen 16, nach dem Lösen der Arretierung des Auszugs 17, auszufahren, sodass sich die Cube6 außerhalb des Fahrzeuginnenraums befinden. Wie ersichtlich können die geschlossenen Cube6 als Auflagefläche für eine Schlafunterlage 25, beispielsweise eine Matratze Verwendung finden.

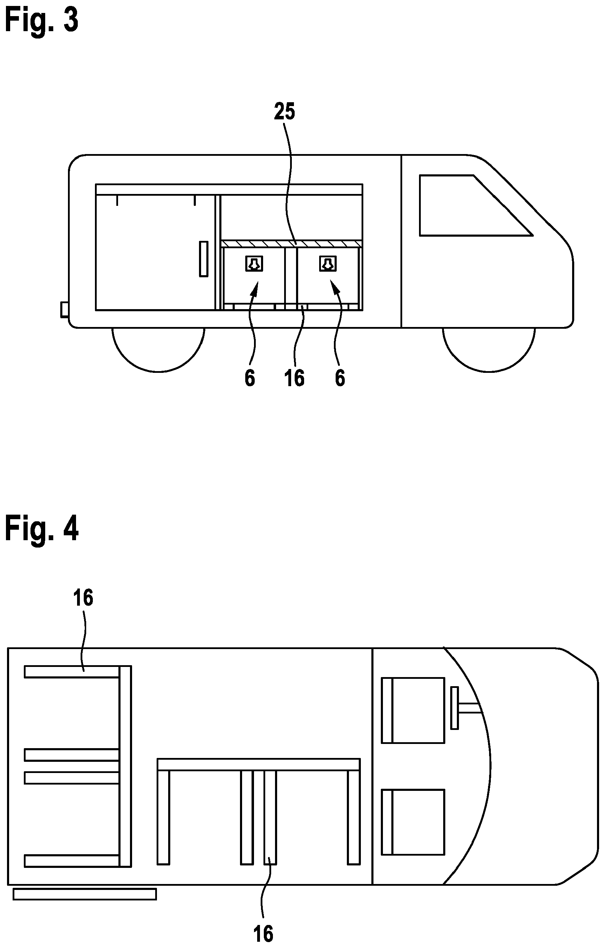

Aus Figur 3 sind zwei Cube6, befestigt auf einem Grundrahmen 16, ersichtlich. Der Grundrahmen 16 ist direkt mit dem Ladeboden des Kraftfahrzeugs verbunden. Nach der Arretierung der Cube6 mit dem Grundrahmen 16 sind diese ortsfest gehalten und können nicht wie im Ausführungsbeispiel gemäß Figur 2 aus dem Fahrzeuginneren ausgefahren werden. Wird diese Funktion benötigt, kann zwischen dem Ladeboden des Kraftfahrzeugs und dem Grundrahmen 16 ein Auszug 17 (nicht in Figur 3 dargestellt) angeordnet sein. Die beiden Cube6 sind durch die Seitentür des Kraftfahrzeugs zugänglich.

Figur 4 zeigt in der Draufsicht die Anordnung von zwei Grundrahmen 16 am Ladeboden eines Kraftfahrzeugs. Werden auf jedem der Grundrahmen 16 jeweils zwei Cube6 arretiert, entspricht dies dann der in Figur 2 und 3 gezeigten Darstellung. Wie ersichtlich wäre bei Bedarf die Installation eines weiteren Grundrahmens 16 im Bereich der Ladefläche hinter dem Fahrer- und Beifahrersitz möglich. Dies würde die optimale Ausnutzung der Ladefläche mit Cube6 ermöglichen. Eine solche Anordnung würde dann die Verwendung von sechs Cube6 ermöglichen.

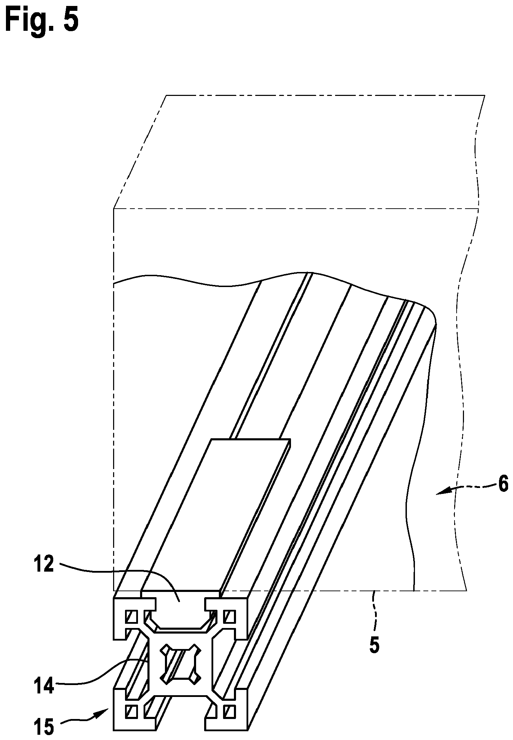

Figur 5 zeigt die erfindungsgemäße Schnittstelle. Daraus ist ersichtlich, dass ein Cube6 mit einer Profilschiene 15 verbunden ist. Der Querschnitt der Profilschiene 15 ist beispielhaft dargestellt und kann nach den Stabilitätsanforderungen angepasst sein. Die Profilschiene 15 weist ein Profil 14 auf, in dieses kann ein Gleitelement 12 längsbeweglich aufgenommen werden. Das Gleitelement 12 ist mit dem Boden 5 der Cube6 verbunden. Am Boden 5 eines Cube6 ist in jeder Ecke ein Gleitelement 12 angebracht. Weist der Cube6 eine quadratische Grundform auf sind 4 Gleitelemente 12 an dem Cube6 befestigt. Die Gleitelemente 12 dienen beim Einbau des Cube6 als Führungselemente 12 und weisen entsprechende Profile auf. Ein Cube6 mit Gleitelementen 12 kann, wenn in die Aufnahmeschiene 15 eingesetzt, in Längsrichtung verschoben werden.

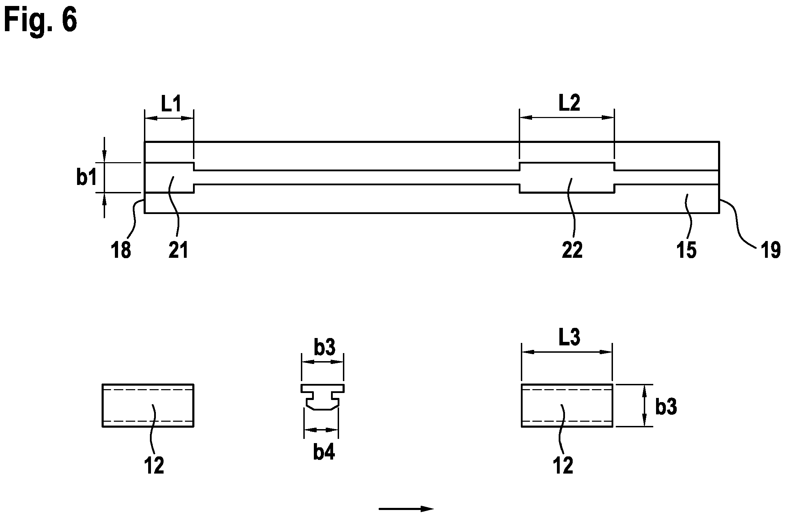

Figur 6 zeigt einen Ausschnitt einer Aufnahmeschiene 15 in Draufsicht mit zwei Öffnungen 21, 22 und zwei Gleitelemente 12 in Draufsicht, sowie den Querschnitt eines Gleitelements 12. Am ersten Ende 18 der Aufnahmeschiene 15 ist eine erste Öffnung 21 angebracht. Die erste Öffnung 21 beginnt am ersten Ende 18 und erstreckt sich in Richtung des zweiten Endes 19 der Aufnahmeschiene 15. Die Länge L1 der ersten Öffnung ist kleiner als die Länge L3 eines Gleitelements 12. Die Breite b1 der Öffnung 21 ist kleiner als die Breite b3, jedoch größer als die Breite b4 des Führungsabschnitts des Gleitelements 12. Dadurch ist es möglich ein Gleitelement 12 von oben in eine Aufnahmeschiene 15 einzuführen, und dieses in Längsrichtung zu verschieben. Die zweite Öffnung 22 ist im Bereich des zweiten Endes 19 der Aufnahmeschiene 15, jedoch von dem zweiten Ende 19 beabstandet, angeordnet. Die Länge L2 der zweiten Öffnung ist geringfügig größer als die Länge L3 des Gleitelements 12. Die Breite b1 der Öffnungen 21, 22 sind identisch und entsprechen den oben angegebenen Bedingungen.

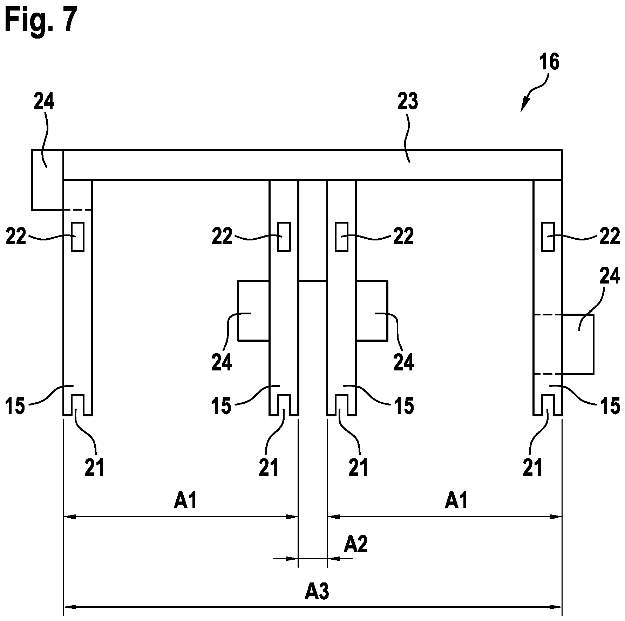

Figur 7 zeigt einen Grundrahmen 16 in Draufsicht, der ausgelegt ist für die Aufnahme von zwei Cube6. Der Grundrahmen 16 wird aus vier Aufnahmeschienen 15 und einem Verbindungselement 23 gebildet. Die ersten Öffnungen 21 und die zweiten Öffnungen 22 zur Aufnahme der Gleitelemente 12 sind ersichtlich. Der Abstand A1 von den äußeren Seitenflächen der Aufnahmeschiene 15 entspricht der Breite eines Cube6. Der Abstand A2 zwischen zwei benachbarten Seitenflächen 16 entspricht dem Abstand, der für die Handhabung der Cube6 erforderlich ist und somit dem Abstand zwischen zwei angeordneten Cube6. Er ist so bemessen, dass es möglich ist, mit den Händen den Handgriff 10 zu fassen, und das Cube6 ein- bzw. auszubauen. Der Abstand A3 kann im Wesentlichen der Öffnungsweite im Heckbereich eines Kraftfahrzeugs entsprechen, und entspricht dem Abstand der zwei Seitenflächen von zwei positionierten Cube6, die am entferntesten voneinander angeordnet sind und voneinander wegweisen. Der Grundrahmen 16 kann mit im Stand der Technik bekannten Befestigungsmitteln an den dafür vorgesehenen Schienen am Ladeboden eines Kraftfahrzeugs befestigt werden und ist dann ortsfest gehalten. Alternativ kann der Grundrahmen auf einen Auszug 17 (in Figur 7 nicht dargestellt) montiert werden und ist dann entsprechend der Beweglichkeit des Auszugs 17 beweglich angeordnet. Sollte der Abstand, der im Ladeboden eines Kraftfahrzeugs angeordneten Schienen, nicht mit dem Abstand der Aufnahmeschienen 15 übereinstimmen, können am Grundrahmen 16 ein oder mehrere Verbindungsmittel 24 angeordnet sein. Diese können so ausgelegt werden, dass dadurch die Abstandsunterschiede ausgeglichen werden können und der Grundrahmen 16 am Kraftfahrzeug befestigt werden kann.

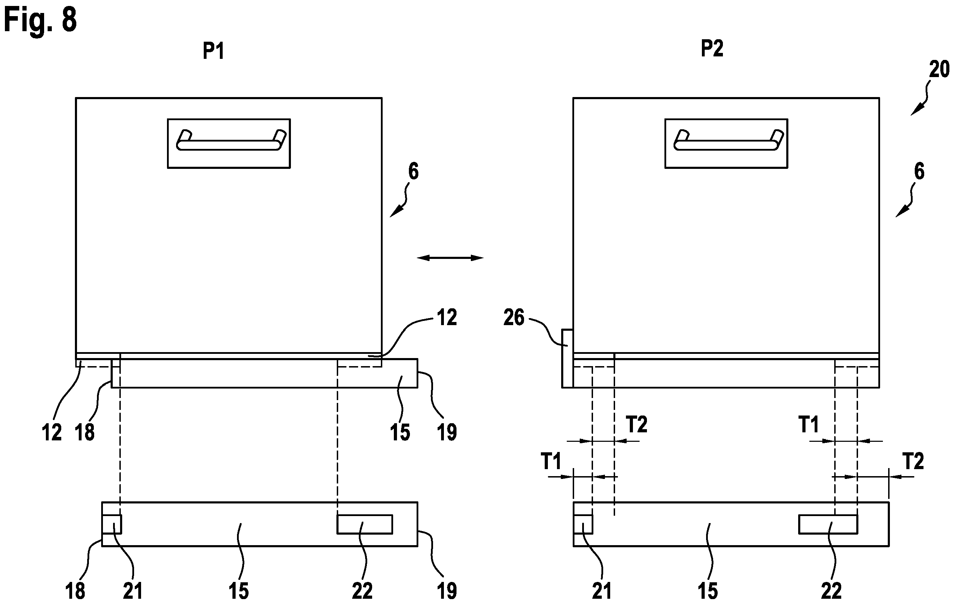

Aus Figur 8 sind zwei Positionen P1 und P2 ersichtlich. Aus dem linken Teil in Figur 8 ist die Einfüge- bzw. Entnahmeposition P1 eines Cube6 in den Grundrahmen 16 ersichtlich. Aus dem rechten Teil der Figur 8 ist die Position P2, die Endposition, ersichtlich, in der ein Cube6 für den Fahrbetrieb des Kraftfahrzeugs arretiert ist. Beim Einfügen eines Cube6 in den Grundrahmen 16 wird ein Cube6 mit seinen am Boden 5 befestigten Gleitelementen 12 (vorzugsweise 4 Stück) über die Öffnungen 21, 22 platziert (P1 in Figur 8). Dabei taucht das im Bereich des ersten Endes 18 der Aufnahmeschiene 15 angeordnete Gleitelement 12 in die erste Öffnung 21 ein, wobei ein Teilbereich des Gleitelements 12 sich außerhalb der Aufnahmeschiene 15 befindet. Das Gleitelement 12 welches im Bereich des zweiten Endes 19 der Aufnahmeschiene 15 angeordnet ist, taucht komplett in die Öffnung 22 ein. Nach der Positionierung des Cube6 bzw. der am Cube6 befestigten Gleitelemente 12 in den Öffnungen 21, 22 wird der Cube6 in Richtung des zweiten Endes 19, in Position P2 geschoben. In seiner Endposition 20 angekommen wird der Cube6 mit einem an sich bekannten Haltemittel 26 ortsfest verriegelt. In der Endposition 20 ist das im Bereich des ersten Endes 18 angeordnete Gleitstück 12 vollständig innerhalb der Aufnahmeschiene 15 positioniert. In der Endposition P2 eines Cube6 besteht zwischen dem Profil 14 und den Gleitstücken 12 eine formschlüssige Verbindung. Dabei kann der Formschluss lediglich zwischen einem Teilbereich eines Gleitstücks 12 und dem Profil 14 der Aufnahmeschiene 15 bestehen. Dieser Überlappungsbereich ist aus Figur 8 mit T2 ersichtlich. Ist dies der Fall, ist der andere Teilbereich des Gleitstücks 12 im Bereich der Öffnung 21, 22 angeordnet, in Figur 8 mit T1 gekennzeichnet und wird als Überlappungsbereich T1 bezeichnet.

| | |
|---|---|
| 1 | Deckel von 6 |
| 2 | Rahmen |
| 3 | Leichtbauprofile |
| 4 | Seitenwand von 6 |
| 5 | Boden von 6 |
| 6 | Modul, Cube6 |
| 7 | Aufnahmeraum von 6 |
| 8 | Verschluss |
| 9 | Mulde |
| 10 | Handgriff |
| 11 | Winkelstück |
| | |
| 12 | Gleitelement, Führungselement |
| 14 | Profil |
| 15 | Aufnahmeschiene, Profilschiene |
| 16 | Grundrahmen |
| 17 | Auszug |
| 18 | erstes Ende von 15 |
| 19 | zweites Ende von 15 |
| 20 | Endposition |
| 21 | erste Öffnung |
| 22 | zweite Öffnung |
| 23 | Verbindungslelement |
| 24 | Verbindungsmittel |
| 25 | Schlafunterlage |
| 26 | Haltemittel |
| | |
| A1 | Abstand von zwei Aufnahmeschinen 15 |
| A2 | Abstand zwischen zwei Cube6 |
| A3 | Abstand von zwei Cube6 |
| | |
| B1 | Breite von 21 und 22 |
| B4 | Breite von 12 |
| B3 | Breite des Führungsabschnitts von 12 |
| | |
| L1 | Länge von 21 |
| L2 | Länge von 22 |
| L3 | Länge von 12 |
| | |
| T1 | Überlappungsbereich |
| T2 | Überlappungsbereich |

| | |
|---|---|
| P1 | Einfüge- Entnahmeposition |
| P2 | Endposition |

## Patentansprüche

1. Schnittstelle zwischen einem Cube6 und der Ladefläche eines Kraftfahrzeugs, bestehend aus
• einem Grundrahmen (16) der wenigstens eine Profilschiene (15) umfasst,
• wenigstens einem Führungselement (12) und
• einem Haltemittel (26)
• wobei der Grundrahmen (16) mit dem Kraftfahrzeug und das Führungselement (12) mit einem Cube6 verbunden ist,
**dadurch gekennzeichnet, dass** die Profilschiene (15) wenigstens eine erste Öffnung (21) und eine zweite Öffnung (22) aufweist, in der das Führungselement (12) eingreift.

2. Schnittstelle nach Anspruch 1 **dadurch gekennzeichnet, dass** die Profilschiene (15) ein erstes Ende (18) und ein zweites Ende (19) aufweist, und dass die erste Öffnung (21), ausgehend vom ersten Ende (18), sich in Richtung des zweiten Endes (19) erstreckt.

3. Schnittstelle nach Anspruch 1 **dadurch gekennzeichnet, dass** die Profilschiene (15) ein erstes Ende (18) und ein zweites Ende (19) aufweist, und dass die zweite Öffnung (22) in einem Abstand zum zweiten Ende (19) angeordnet ist.

4. Schnittstelle nach Anspruch 2 **dadurch gekennzeichnet, dass** die erste Öffnung (21) eine Länge (L1) aufweist, die kleiner ist als die Länge (L3) des Führungselements (12).

5. Schnittstelle nach Anspruch 1 **dadurch gekennzeichnet, dass** der Grundrahmen (16) zwei Aufnahmeschienen (15) und ein Verbindungselement (23) umfasst.

6. Schnittstelle nach Anspruch 5 **dadurch gekennzeichnet, dass** der Abstand (A1) der beiden Aufnahmeschienen (15) mit dem Außenmaß, der Breite der Cube6 übereinstimmt.

7. Schnittstelle nach Anspruch 1 **dadurch gekennzeichnet, dass** der Grundrahmen (16) vier Aufnahmeschienen (15) und ein Verbindungselement (23) umfasst.

8. Schnittstelle nach Anspruch 7 **dadurch gekennzeichnet, dass** der Abstand (A3) der beiden äußeren Aufnahmeschienen (15) mit dem Abstand, von zwei Seitenflächen von zwei montierten Cube6 übereinstimmt.

9. Schnittstelle nach einem der vorstehenden Ansprüche **dadurch gekennzeichnet, dass** nach dem Einbau eines Cube6, wenn sich diese in deren Endposition befindet, das Führungselement (12) in die Öffnung (21, 22) ragt und in einem Bereich (T1) diese überlappt.

10. Schnittstelle nach Anspruch 1 **dadurch gekennzeichnet, dass** der Grundrahmen (16) an einem Auszug (17), der mit dem Kraftfahrzeug verbunden ist, angebracht ist, wodurch der Grundrahmen (16) längsbeweglich gelagert ist.

11. Verfahren zum Einbau eines Cube6 in ein Kraftfahrzeug mit den Schritten
• Einfügen der Führungselemente (12) einen Cube6 in die Öffnungen (21), (22) einer Aufnahmeschiene (15) eines in einem Kraftfahrzeug montierten Grundrahmens (16),
• Verschieben des Cube6 in Längsrichtung, bis er seine Endposition (20) erreicht hat und
• Arretieren des Cube6 mittels einem Haltemittel (26).

12. Verfahren zum Ausbau eines Cube6 aus einem Kraftfahrzeug mit den Schritten
• Lösen des Haltemittels (26),
• Verschieben des Cube6 in Richtung des ersten Endes (18) einer Aufnahmeschiene (15), bis die Führungselemente (12) des Cube6 den Bereich der Öffnungen (21, 22) erreichen,
• Anheben und Entnehmen des Cube6.
